# FASCICULE DE BREVET EUROPEEN

(11) **EP 2 834 828 B1**
(45) Date de publication et mention de la délivrance du brevet: **25.05.2016**
(21) Numéro de dépôt: 13719928.7
(22) Date de dépôt: 26.03.2013
(51) Int. Cl.: H01H 85/54, B60L 3/04, H01R 13/629

(54) **DISPOSITIF DE COUPURE ELECTRIQUE DE SECURITE**
ELEKTRISCHE ABSCHALTUNGSSICHERHEITSVORRICHTUNG
ELECTRIC CUT-OFF SAFETY DEVICE

(30) Priorité: 03.04.2012 FR 1253052
(43) Date de publication de la demande: 11.02.2015
(73) Titulaire: Renault S.A.S., 92100 Boulogne-Billancourt (FR)
(72) Inventeur: COLCHEN, Ludovic, F-78960 Voisins-le-Bretonneux (FR); LASSARTESSES, Robert, F-78000 Versailles (FR)
(86) Numéro de dépôt international: PCT/FR2013/050644
(87) Numéro de publication internationale: WO 2013/150218

(56) Documents cités:
- EP-A1- 0 638 458
- DE-A1-102010 001 648
- FR-A1- 2 440 067
- US-A1- 2005 098 419

## Description

La présente invention concerne un véhicule électrique et plus particulièrement la sécurisation d'une batterie de puissance d'un tel véhicule par un dispositif de coupure électrique de sécurité.

Un tel dispositif de coupure électrique de sécurité est destiné à permettre d'isoler une batterie de puissance afin d'empêcher tout courant/différence de potentiel dans toute partie du circuit de puissance, afin de réaliser sans danger une intervention sur le véhicule, soit en après-vente par les équipes après-vente, soit après un accident par les équipes de secours. Il est à noter que dans le cas d'un accident, le circuit de puissance peut avoir été endommagé et peut présenter des courts-circuits additionnels.

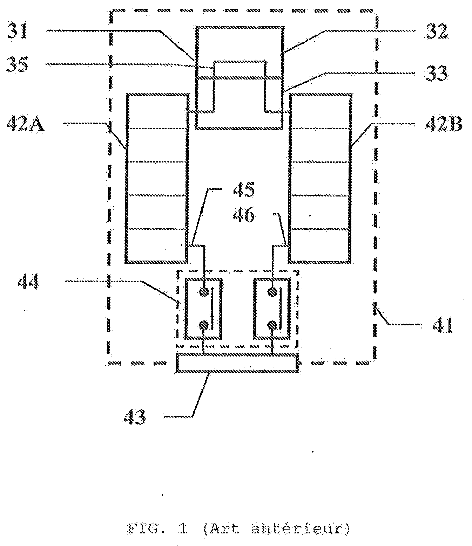

Tel qu'illustré à la figure 1, un circuit de puissance 41 d'un véhicule électrique selon l'art antérieur, comprend typiquement une batterie de puissance 42, comprenant par exemple deux demi packs 42A, 42B, un connecteur 43, un relais de connexion 44 et un dispositif de coupure électrique de sécurité 31. Le circuit de puissance 41 peut comprendre encore d'autres composants, tel que des fusibles, non représentés.

Le connecteur 43 permet de relier le circuit de puissance 41 au circuit d'utilisation comprenant entre autres le ou les moteur(s). Ce connecteur 43 permet une déconnexion, afin par exemple de pouvoir remplacer l'ensemble du circuit de puissance 41 et ainsi la batterie de puissance 42.

Le dispositif de coupure électrique de sécurité 31 permet d'ouvrir le circuit de puissance 41 afin de sécuriser un accès à la batterie 42 et au véhicule électrique. Pour cela un dispositif de coupure électrique de sécurité 31 comprend typiquement une embase 33 dans laquelle vient se placer une fiche 32, afin de fermer un circuit électrique 35. L'extraction de la fiche 32 hors de l'embase 33, par retrait d'une partie 35 du circuit de puissance 41 garantit l'ouverture électrique du circuit de puissance 41.

Le relais de connexion 44 permet de commander, par fermeture, respectivement ouverture, d'au moins un contact, la mise sous tension, respectivement hors tension, du circuit de puissance 41.

Selon l'art antérieur le dispositif de coupure électrique de sécurité 31 est mono polaire, en ce qu'il ne coupe qu'un des deux pôles 45, 46 de la batterie de puissance 42. Pour cela le dispositif de coupure électrique de sécurité 31 ne comprend qu'un unique circuit 35 sélectivement ouvrable. Le dispositif de coupure électrique de sécurité 31 est disposé dans le circuit de puissance 41, au niveau d'un premier pôle 45 de la batterie de puissance 42, au niveau d'un second pôle 46 de la batterie de puissance 42 ou encore comme illustré à la figure 1, entre les deux demi packs 42A, 42B de la batterie de puissance 42.

Cependant une telle configuration ne procure qu'une sécurité limitée en aval des demi packs 42A, 42B de la batterie de puissance 42 et ne garantit pas l'absence de différence de potentiel en cas de défaillance cumulative de plusieurs barrières de protection. Ainsi, selon un scénario illustratif, si un relais de connexion 44 reste collé, et qu'un moyen d'isolement de la batterie, censé isoler la batterie 42 du châssis du véhicule, est défectueux, par exemple suite à un accident, une différence de potentiel électrique peut être présente entre une partie active du pôle 45, 46 déficient et le châssis du véhicule, en un endroit quelconque sur le véhicule électrique.

De plus une telle configuration mono polaire du dispositif de coupure électrique de sécurité 31 nécessite, pour assurer une conformité à la réglementation en vigueur, un relais de connexion 44 bipolaire, tel que figuré à la figure 1.

La demande EP 0 638 458 A1 divulgue un dispositif pyrotechnique visant à sécuriser un véhicule électrique suite à un accident. Il présente les inconvénients explicités ci-dessus.

La présente invention améliore grandement la sécurité et garantit une absence de différence de potentiel, dans de nombreux scénarios, y compris en cas de défaillance des barrières de protection.

A cet effet, la présente invention a pour objet un véhicule électrique comprenant un circuit de puissance, ledit circuit comprenant une batterie de puissance comportant deux demi packs, un connecteur pour connecter le circuit de puissance à un moteur électrique, ainsi qu'un relais de connexion pour mettre sous tension ou hors tension le circuit de puissance. Le circuit de puissance comprend encore un dispositif de coupure électrique de sécurité bipolaire disposé de manière à être apte à déconnecter les deux pôles de la batterie de puissance.

Avantageusement, le dispositif comprend une embase et une fiche amovible.

Dans un mode de réalisation, la fiche peut comprendre encore au moins un fusible principal sur un au moins des pôles. Par exemple, le fusible principal peut être un fusible rapide.

Dans un mode de réalisation, la fiche peut comprendre un levier de verrouillage / déverrouillage sur l'embase, apte à réaliser une démultiplication.

Dans un mode de réalisation, le véhicule peut comprendre encore un moyen de test de la présence de la fiche dans l'embase.

Dans un mode de réalisation, le dispositif de coupure électrique de sécurité peut être disposé entre la batterie de puissance et le connecteur.

Dans un mode de réalisation, le circuit de puissance peut comprendre encore un premier fusible secondaire disposé à proximité du dispositif de coupure électrique de sécurité. Par exemple, le premier fusible secondaire peut être un fusible lent. Par exemple, le premier fusible secondaire peut être disposé sur un pôle non protégé par un fusible principal.

Dans un mode de réalisation, le circuit de puissance peut comprendre encore un deuxième fusible secondaire, disposé entre les deux demi packs. Par exemple, le deuxième fusible secondaire peut être un fusible lent.

Dans un mode de réalisation, le relais de connexion peut être monopolaire.

Avantageusement, le relais de connexion peut être disposé entre les deux demi packs.

D'autres caractéristiques, détails et avantages de l'invention ressortiront plus clairement de la description détaillée donnée ci-après à titre indicatif en relation avec des dessins sur lesquels :
- la figure 1, déjà décrite, présente un circuit de puissance selon l'art antérieur,
- la figure 2 présente un schéma de principe d'un dispositif de coupure électrique de sécurité selon un premier mode de réalisation,
- la figure 3 présente un schéma de principe d'un dispositif de coupure électrique de sécurité selon un deuxième mode de réalisation,
- la figure 4 présente un circuit de puissance selon un premier mode de réalisation,
- la figure 5 présente un circuit de puissance selon un deuxième mode de réalisation,
- la figure 6 présente un circuit de puissance selon un troisième mode de réalisation,
- les figures 7-8 présentent un plan d'une embase selon un mode de réalisation, la figure 7 en vue de dessous, et la figure 8 en vue de face,
- la figure 9 présente cette même embase en vue perspective,

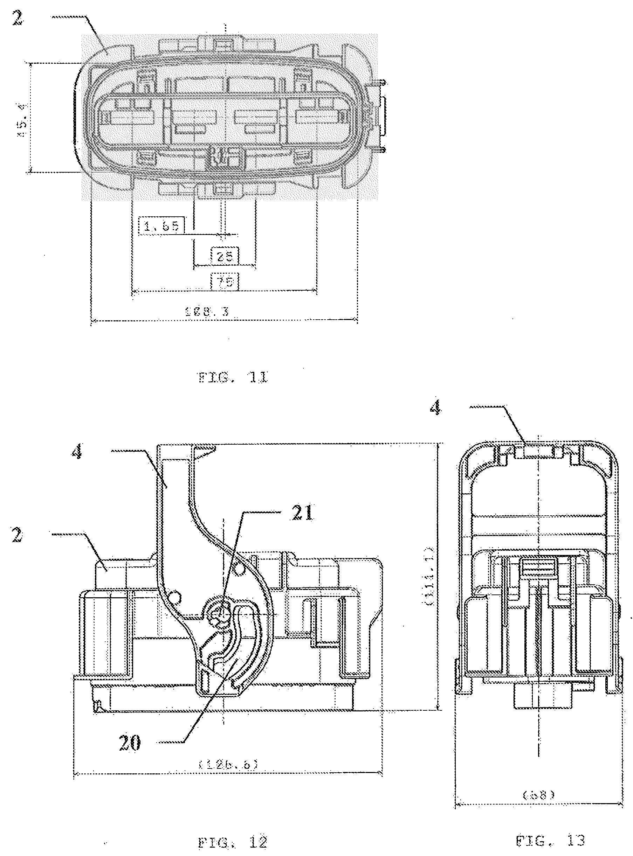

- la figure 10 présente la fiche des figures 11-13 en vue perspective,
- les figures 11-13 présentent un plan d'une fiche selon un mode de réalisation, la figure 11 en vue de dessous, la figure 12 en vue de face et la figure 13 en vue de gauche.

Selon une caractéristique importante de l'invention, un dispositif de coupure électrique de sécurité 1 est bipolaire, en ce qu'il permet de couper simultanément les deux pôles 15, 16 d'une batterie 12.

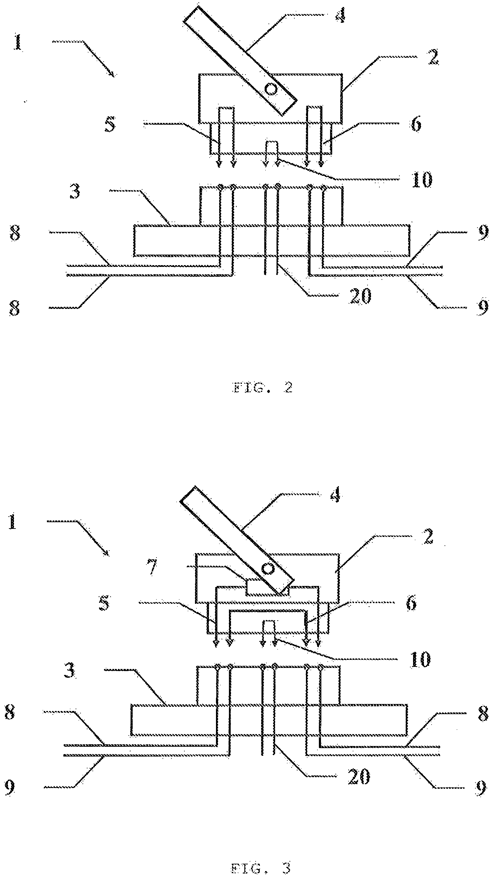

Pour cela, tel qu'illustré à la figure 2 selon un premier mode de réalisation, et à la figure 3 selon un deuxième mode de réalisation, le dispositif de coupure électrique de sécurité 1 comprend un premier circuit électrique 8 interrompu, respectivement un deuxième circuit électrique 9 interrompu, et un premier circuit électrique de jonction 5, respectivement un deuxième circuit électrique de jonction 6, apte à venir fermer ledit premier circuit électrique 8, respectivement ledit deuxième circuit électrique 9, au niveau de son interruption.

Selon un mode de réalisation, le premier circuit électrique 8 interrompu et le deuxième circuit électrique 9 interrompu sont disposés dans une embase 3 du dispositif de coupure électrique de sécurité 1, tandis que le premier circuit électrique de jonction 5 et le deuxième circuit électrique de jonction 6 sont disposés dans une fiche 2 complémentaire de ladite embase 3 et apte à venir sélectivement se solidariser, respectivement désolidariser, avec ladite embase 3 de manière à réaliser la fermeture, respectivement l'ouverture desdits circuits électriques 8, 9.

La figure 2 illustre un mode de réalisation où les deux pôles sont connectés en direct, tandis que la figure 3 illustre un mode de réalisation où les deux pôles sont croisés.

Selon un mode de réalisation la fiche 2 peut rester solidaire de l'embase 3 avec une mobilité restreinte permettant sélectivement de fermer/ouvrir lesdits circuits électriques 8, 9.

Selon un mode de réalisation alternatif préférentiel, la fiche 2 est amovible et peut être entièrement séparée de l'embase 3. Ce mode de réalisation est avantageux en ce qu'il permet, lorsque la fiche 2 est retirée et que les circuits 8, 9 sont ouverts, de consigner la fiche 2 à distance de l'embase 3, du circuit de puissance 11 et du véhicule électrique. L'absence de la fiche 2, comprenant une partie 5, 6 ainsi retirée, de chacun des deux circuits électriques, laisse les deux circuits électriques 8, 9 interrompus, et garantit physiquement une coupure électrique efficace et sécurisée.

Selon un mode de réalisation, le dispositif de coupure électrique de sécurité 1 comprend avantageusement un fusible principal 7 sur au moins un de ses pôles. Il peut ainsi, comprendre deux tels fusibles principaux 7, disposés chacun sur un des pôles. Chacun desdits au moins un fusible principal 7 peut être indifféremment disposé dans l'embase 3 ou dans la fiche 2. Cependant selon un mode de réalisation préférentiel, ledit au moins un fusible principal 7 est avantageusement disposé dans la fiche 2. Ainsi, si cette fiche 2 est amovible, la fiche 2 ensemble ledit au moins un fusible principal 7 constituent une unité de maintenance facilement remplaçable. Ledit au moins un fusible principal 7 peut ainsi être remplacé en remplaçant la fiche 2 par une fiche 2 neuve.

Selon un mode de réalisation, le dispositif de coupure électrique de sécurité 1 comprend avantageusement un moyen de verrouillage / déverrouillage afin d'assurer une bonne tenue de la fiche 2 en place dans l'embase 3, et ce malgré les vibrations et chocs pouvant être transmis par le véhicule électrique au dispositif de coupure électrique de sécurité 1.

Selon un mode de réalisation avantageux, le dispositif de coupure électrique de sécurité 1 comprend encore un premier moyen de démultiplication apte à aider l'insertion de la fiche 2 dans l'embase 3 avec un effort d'insertion réduit.

Selon un mode de réalisation avantageux, le dispositif de coupure électrique de sécurité 1 comprend encore un deuxième moyen de démultiplication apte à aider l'extraction de la fiche 2 hors de l'embase 3 avec un effort d'insertion réduit.

Le moyen de verrouillage, le moyen de déverrouillage, le premier moyen de démultiplication d'insertion et le deuxième moyen de démultiplication d'extraction peuvent avantageusement être confondus et être réalisés au moyen d'un levier 4, par exemple solidaire de la fiche 2, coopérant avec au moins un ergot 19 disposé en regard et solidaire de l'embase 3.

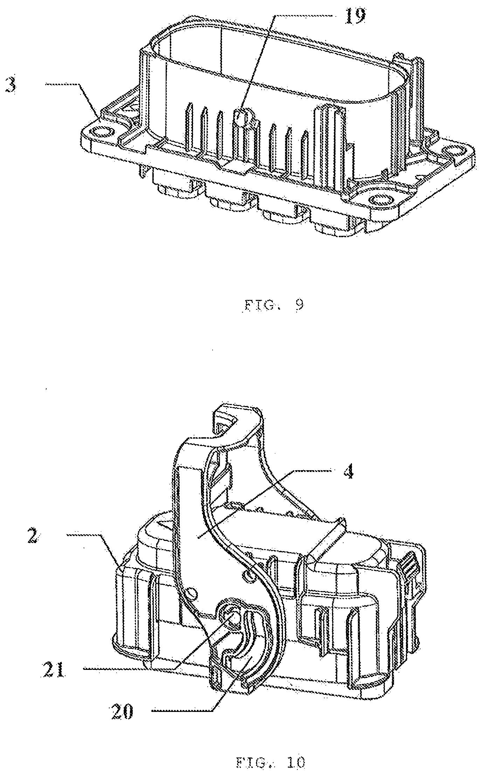

Un tel mode de réalisation est plus particulièrement illustré aux figures 9 et 10. Le levier 4 est articulé autour d'un axe de rotation 21 relativement à la fiche 2. Il comprend une rainure 20 présentant sensiblement une forme de spirale et apte à engager, lorsque la fiche 2 est présentée en regard de l'embase 3, un ergot 19 solidaire de l'embase 3.

Lors d'une insertion / verrouillage, le levier 4 est initialement en position verticale, relativement à la figure. Dans cette position la rainure 20 présente une ouverture permettant d'engager l'ergot 19. Le levier 4 est ensuite manoeuvré afin d'effectuer une rotation horaire autour de l'axe de rotation 21 afin d'atteindre une position horizontale, relativement à la figure. Ce faisant, un premier des contours de la rainure 20, celui disposé en dessous sur la figure, vient en contact contre ledit ergot 19. Ceci réalise une démultiplication qui facilite l'insertion de la fiche 2 dans l'embase 3. La forme en spirale de la rainure 20 tend lors de cette rotation horaire à rapprocher l'ergot 19 de l'axe de rotation 21. A l'issue de ladite rotation, ce même contour, toujours en contact avec l'ergot 19 assure un verrouillage de l'assemblage fiche 2 / embase 3.

Lors d'un déverrouillage / extraction, le levier 4 est initialement en position horizontale, relativement à la figure. Il est ensuite manoeuvré afin d'effectuer une rotation antihoraire autour de l'axe de rotation 21 afin d'atteindre une position verticale, relativement à la figure. Ce faisant, le deuxième des contours de la rainure 20, celui disposé en dessus sur la figure, vient en contact contre ledit ergot 19. Cet appui réalise une démultiplication qui facilite l'extraction de la fiche 2 hors de l'embase 3. La forme en spirale de la rainure 20 tend lors de cette rotation antihoraire à éloigner l'ergot 19 de l'axe de rotation 21. A l'issue de ladite rotation, l'ergot 19 se trouve en face de ladite ouverture de la rainure 20 et peut être dégagé afin de permettre de séparer la fiche 2 de l'embase 3.

La combinaison du moyen de verrouillage, du moyen de déverrouillage, du premier moyen de démultiplication d'insertion, et du deuxième moyen de démultiplication d'extraction permet avantageusement de simplifier les manoeuvres d'insertion ou d'extraction. En effet une unique manoeuvre du levier 4 permet simultanément de réaliser l'insertion et le verrouillage ou encore simultanément le déverrouillage et l'extraction.

Le moyen de démultiplication d'extraction est particulièrement utile pour garantir une possibilité de coupure électrique, y compris lorsque le courant est établi. Il apparaît dans ce cas un effort d'extraction de l'ordre de 24 daN. Un moyen de démultiplication par levier 4, tel que décrit précédemment, permet avantageusement de réduire cet effort au quart, soit une valeur de 6 daN, plus acceptable ergonomiquement.

L'ensemble du corps du dispositif de coupure électrique de sécurité 1, à l'exclusion des parties électriques : fusible(s) 7, circuits 5, 6, 8, 9, tant de la fiche que de l'embase est avantageusement réalisé en plastique par moulage. Afin de supporter les températures élevées pouvant être occasionnées par le passage du courant ce plastique est avantageusement renforcé par la présence de fibres.

Ledit au moins un fusible principal 7, disposé dans le dispositif de coupure électrique de sécurité 1, est avantageusement un fusible rapide. Un fusible rapide s'entend ici relativement aux autres fusibles secondaires 17, 18 qui peuvent être disposés dans le circuit de puissance 11. Ainsi en cas de concurrence entre un fusible principal 7 et un fusible secondaire 17, 18, un des au moins un fusible principal 7 va fondre prioritairement. Ceci est particulièrement avantageux dans les configurations où ledit au moins un fusible principal 7 est plus aisément remplaçable.

Selon un mode de réalisation le dispositif de coupure électrique de sécurité 1 comprend encore un moyen de test 10, 20 de la présence de la fiche 2 dans l'embase 3. Ceci peut être réalisé par un circuit électrique 10, 20 interrompu lorsque la fiche 2 est retirée de l'embase 3. Ledit circuit électrique 10, 20 comprend une partie 10 solidaire de la fiche 2 qui assure la fermeture d'une partie interrompue 20 solidaire de l'embase 3, lorsque la fiche 2 est insérée dans l'embase 3. Il est ainsi possible de tester électriquement la présence de la fiche 2 dans l'embase 3, par tout moyen apte à détecter sélectivement une ouverture/fermeture dudit circuit électrique 10, 20.

L'invention concerne encore l'utilisation d'un tel dispositif de coupure électrique de sécurité 1 selon l'un quelconque des modes de réalisation précédents sur un véhicule électrique.

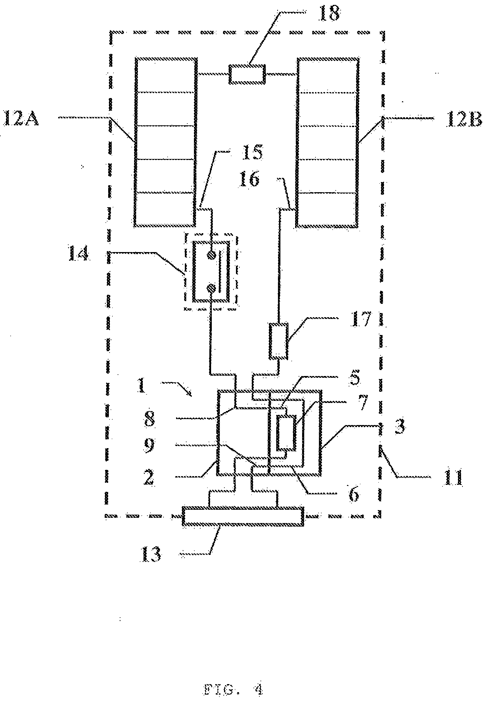

Tel qu'illustré aux figures 4-6, un circuit de puissance 11 d'un véhicule électrique selon l'invention, comprend typiquement une batterie de puissance 12, comprenant par exemple deux demi packs 12A, 12B, un connecteur 13, un relais de connexion 14 et un dispositif de coupure électrique de sécurité 1. Le circuit de puissance 11 peut optionnellement comprendre encore d'autres composants, tel que des fusibles 7, 17, 18.

Le connecteur 13 permet de relier le circuit de puissance 11 au circuit d'utilisation comprenant entre autres le ou les moteur(s). Ce connecteur 13 permet une déconnexion, afin par exemple de pouvoir remplacer l'ensemble du circuit de puissance 11 et ainsi la batterie de puissance 12.

Le dispositif de coupure électrique de sécurité 1 permet d'ouvrir le circuit de puissance 11 afin de sécuriser un accès à la batterie 12 et au véhicule électrique.

Le relais de connexion 14 permet de commander, par fermeture, respectivement ouverture, d'au moins un contact, la mise sous tension, respectivement hors tension, du circuit de puissance 11.

Selon l'invention, le dispositif de coupure électrique de sécurité 1 est bipolaire et comprend deux pôles 5, 6, 8, 9 pouvant sélectivement être ouverts ou fermés. Le dispositif de coupure électrique de sécurité 1 est disposé de manière à couper les deux pôles 15, 16 de la batterie de puissance 12, comme illustré aux figures 4-6.

Une telle configuration, coupant les deux pôles 15, 16 de la batterie de puissance 12, procure une sécurité améliorée en aval des demi packs 12A, 12B de la batterie de puissance 12 et garantit une absence de différence de potentiel, dans de plus nombreux scénarios de défaillance, y compris en cas de défaillance cumulative de plusieurs barrières de protection.

Le dispositif de coupure électrique de sécurité 1 peut être disposé en aval du connecteur 13. Cependant, selon une disposition préférentielle, le dispositif de coupure électrique de sécurité 1 est disposé entre la batterie de puissance 12 et le connecteur 13. Ainsi il est garanti de pouvoir couper les deux pôles 15, 16 de la batterie de puissance 12. Une telle disposition, au plus près de la batterie de puissance 12 est plus sûre en ce qu'elle évite des longueurs de circuit électrique entre la batterie de puissance 12 et le dispositif de coupure électrique de sécurité 1 et élimine ainsi de plusieurs possibilités de court-circuit.

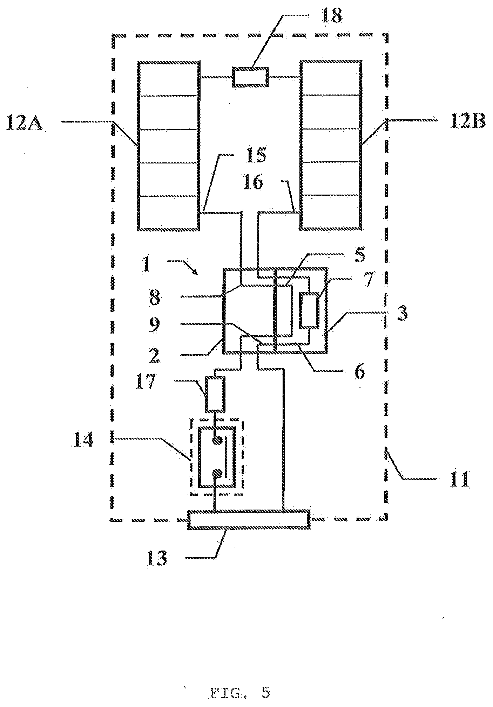

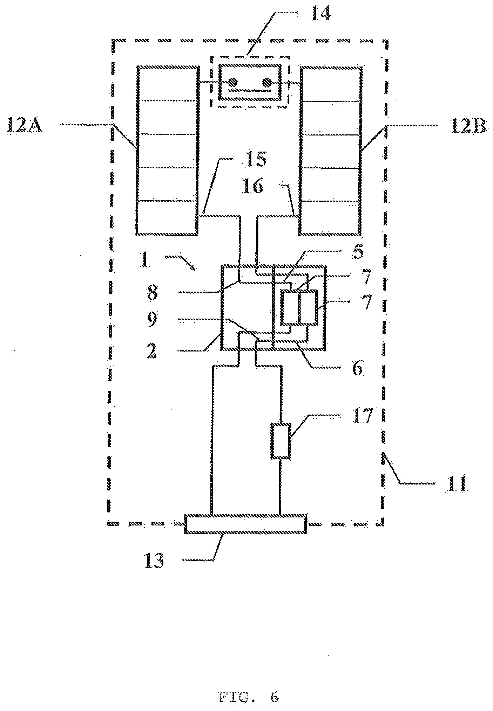

Afin d'améliorer la protection, y compris dans des scénarios de défaillance complexe, le circuit de puissance 11 peut être complété par au moins un premier fusible secondaire 17. Ce premier fusible secondaire 17 peut être disposé à proximité du dispositif de coupure électrique de sécurité 1, indifféremment en amont, comme illustré à la figure 4, ou en aval, comme illustré aux figures 5 et 6.

Ledit au moins un premier fusible secondaire 17 est avantageusement un fusible lent. Un fusible lent s'entend ici relativement audit au moins un fusible principal 7. Ainsi en cas de concurrence entre un fusible principal 7 et un fusible secondaire 17, 18, un des au moins un fusible principal 7 va fondre prioritairement.

Selon un mode de réalisation préférentiel, ledit premier fusible secondaire 17 est disposé sur un pôle 15, 16 non protégé par un fusible principal 7. Ainsi à la figure 4, un unique fusible principal 7 protège le pôle 15 de la batterie de puissance 12. Le premier fusible secondaire 17 est alors avantageusement disposé de manière à protéger l'autre pôle 16 de la batterie de puissance 12. Au contraire, à la figure 5, un unique fusible principal 7 protège le pôle 16 de la batterie de puissance 12. Le premier fusible secondaire 17 est alors avantageusement disposé de manière à protéger l'autre pôle 15 de la batterie de puissance 12. La figure 6 illustre un mode de réalisation comprenant deux fusibles principaux 7 protégeant chacun des pôles 15, 16 de la batterie de puissance 12. Ceci n'interdit pas une protection redondante conférée par un premier fusible secondaire 17 disposé ici, par exemple, sur le pôle 16 de la batterie de puissance 12.

Selon un mode de réalisation, la batterie de puissance 12 est composée d'au moins deux demi packs 12A, 12B. Le circuit de puissance 11 peut alors comprendre encore un deuxième fusible secondaire 18, avantageusement disposé entre les deux demi packs 12A, 12B. Cette disposition, à l'opposé des pôles 15, 16 est illustrée aux figures 4 et 5.

Ledit au moins un deuxième fusible secondaire 18 est avantageusement un fusible lent. Un fusible lent s'entend ici relativement audit au moins un fusible principal 7. Ainsi en cas de concurrence entre un fusible principal 7 et un fusible secondaire 17, 18, un des au moins un fusible principal 7 va fondre prioritairement.

La réglementation actuelle des véhicules électriques impose une possibilité de coupure électrique sur les deux pôles 15, 16 de la batterie de puissance 12. Un dispositif de coupure électrique de sécurité 31 monopolaire selon l'art antérieur, imposait d'employer un relais de connexion 44 bipolaire. Le fait que le dispositif de coupure électrique de sécurité 1 selon l'invention soit bipolaire, permet avantageusement d'employer un relais de connexion 14 monopolaire, tel qu'illustré aux figures 4-6. Un tel relais de connexion 14 monopolaire peut très bien assurer sa fonction de mise sous tension / mise hors tension commandable en agissant sur un unique pôle 15, 16.

Un tel relais de connexion 14 monopolaire peut être disposé dans le circuit de puissance 11 indifféremment sur l'un des pôles 15 ou sur l'autre 16.

De même, le relais de connexion 14 peut être indifféremment disposé, relativement au dispositif de coupure électrique de sécurité 1, en amont comme illustré à la figure 4, ou en aval comme illustré à la figure 5.

Dans un mode de réalisation où la batterie de puissance 12 est composée d'au moins deux demi packs 12A, 12B, le relais de connexion 14 peut encore être disposé entre les deux demi packs 12A, 12B, comme illustré à la figure 6.

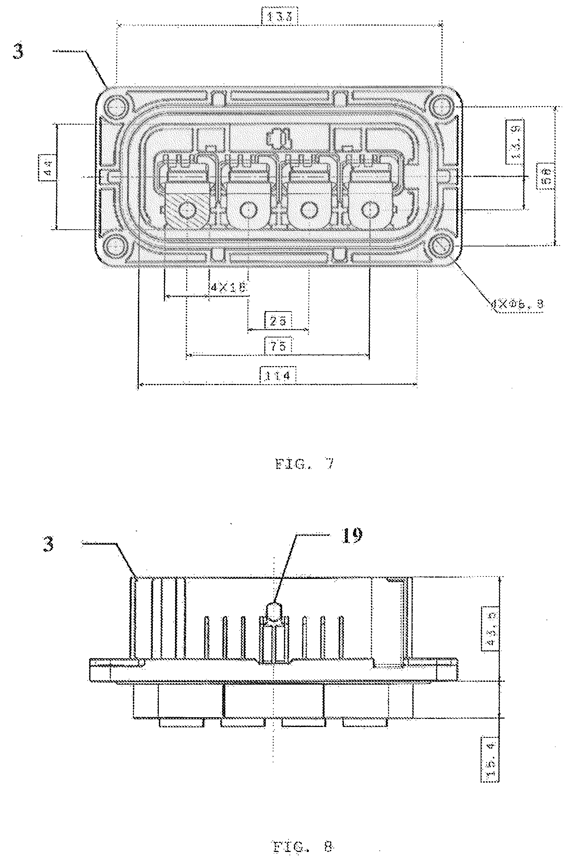

Les figures 7-8, respectivement 11-13, illustrent au moyen de plans côtés, un mode de réalisation possible d'une embase 3, respectivement d'une fiche 2, formant ensemble un dispositif de coupure électrique de sécurité 1. Les dimensions et les proportions sont indicatives.

## Revendications

1. Véhicule électrique comprenant un circuit de puissance (11), ledit circuit comprenant une batterie de puissance (12) comportant deux demi-packs (12A, 12B), un connecteur (13) pour connecter le circuit de puissance à un moteur électrique dudit véhicule, ainsi qu'un relais de connexion (14) pour mettre sous tension ou hors tension le circuit de puissance, le circuit de puissance (11) comprenant encore un dispositif de coupure électrique de sécurité (1) bipolaire disposé de manière à être apte à déconnecter les deux pôles (15, 16) de la batterie de puissance (12), le véhicule étant **caractérisé en ce que** le dispositif de coupure comprend une fiche (2) insérée de manière amovible dans une embase (3), le retrait de la fiche entraînant la déconnexion simultanée des deux pôles.

2. Véhicule selon la revendication 1, où ladite fiche (2) comprend encore au moins un fusible principal (7) sur un au moins des pôles (5, 6).

3. Véhicule selon la revendication 2, où ledit au moins un fusible principal (7) est un fusible rapide.

4. Véhicule selon l'une quelconque des revendications 1 à 3, où ladite fiche (2) comprend un levier (4) de verrouillage / déverrouillage sur l'embase (3), apte à réaliser une démultiplication.

5. Véhicule selon l'une quelconque des revendications 1 à 4, comprenant encore un moyen de test (10, 20) de la présence de la fiche (2) dans l'embase (3).

6. Véhicule selon la revendication 1, où le dispositif de coupure électrique de sécurité (1) est disposé entre la batterie de puissance (12) et le connecteur (13).

7. Véhicule selon l'une quelconque des revendications 1 à 6, où le circuit de puissance (11) comprend encore un premier fusible secondaire (17) disposé à proximité du dispositif de coupure électrique de sécurité (1).

8. Véhicule selon la revendication 7, où ledit premier fusible secondaire (17) est un fusible lent.

9. Véhicule selon la revendication 7 ou 8, où ledit premier fusible secondaire (17) est disposé sur un pôle (15, 16) non protégé par un fusible principal (7).

10. Véhicule selon l'une quelconque des revendications 1 à 9, le circuit de puissance (11) comprenant encore un deuxième fusible secondaire (18), disposé entre les deux demi packs (12A, 12B).

11. Véhicule selon la revendication 10, où ledit deuxième fusible secondaire (18) est un fusible lent.

12. Véhicule selon l'une quelconque des revendications 1 à 11, où le relais de connexion (14) est monopolaire.

13. Véhicule électrique selon l'une quelconque des revendications 1 à 12, où le relais de connexion (14) est disposé entre les deux demi packs (12A, 12B).

## Patentansprüche

1. Elektrofahrzeug, das einen Leistungsschaltkreis (11) enthält, wobei der Schaltkreis eine Leistungsbatterie (12) enthält, die zwei Halb-Packs (12A, 12B), einen Verbinder (13) zur Verbindung des Leistungsschaltkreises mit einem Elektromotor des Fahrzeugs, sowie ein Verbindungsrelais (14) aufweist, um den Leistungsschaltkreis unter Spannung zu setzen oder spannungslos zu machen, wobei der Leistungsschaltkreis (11) außerdem eine zweipolige elektrische Sicherheitsabschaltvorrichtung (1) enthält, die so angeordnet ist, dass sie die zwei Pole (15, 16) der Leistungsbatterie (12) abklemmen kann, wobei das Fahrzeug **dadurch gekennzeichnet ist, dass** die Abschaltvorrichtung einen Steckverbinder (2) enthält, der entfernbar in einen Steckplatz (3) eingefügt ist, wobei das Herausziehen des Steckverbinders das gleichzeitige Abklemmen der zwei Pole nach sich zieht.

2. Fahrzeug nach Anspruch 1, wobei der Steckverbinder (2) außerdem mindestens eine Hauptsicherung (7) auf mindestens einem der Pole (5, 6) enthält.

3. Fahrzeug nach Anspruch 2, wobei die mindestens eine Hauptsicherung (7) eine flinke Sicherung ist.

4. Fahrzeug nach einem der Ansprüche 1 bis 3, wobei der Steckverbinder (2) einen Hebel (4) zur Verriegelung/Entriegelung auf dem Steckplatz (3) enthält, der eine Übersetzung durchführen kann.

5. Fahrzeug nach einem der Ansprüche 1 bis 4, das außerdem eine Testeinrichtung (10, 20) des Vorhandenseins des Steckverbinders (2) im Steckplatz (3) enthält.

6. Fahrzeug nach Anspruch 1, wobei die elektrische Sicherheitsabschaltvorrichtung (1) zwischen der Leistungsbatterie (12) und dem Verbinder (13) angeordnet ist.

7. Fahrzeug nach einem der Ansprüche 1 bis 6, wobei der Leistungsschaltkreis (11) außerdem eine erste Sekundärsicherung (17) enthält, die in der Nähe der elektrischen Sicherheitsabschaltvorrichtung (1) angeordnet ist.

8. Fahrzeug nach Anspruch 7, wobei die erste Sekundärsicherung (17) eine langsame Sicherung ist.

9. Fahrzeug nach Anspruch 7 oder 8, wobei die erste Sekundärsicherung (17) auf einem nicht durch eine Hauptsicherung (7) geschützten Pol (15, 16) angeordnet ist.

10. Fahrzeug nach einem der Ansprüche 1 bis 9, wobei der Leistungsschaltkreis (11) außerdem eine zweite Sekundärsicherung (18) enthält, die zwischen den zwei Halb-Packs (12A, 12B) angeordnet ist.

11. Fahrzeug nach Anspruch 10, wobei die zweite Sekundärsicherung (18) eine langsame Sicherung ist.

12. Fahrzeug nach einem der Ansprüche 1 bis 11, wobei das Verbindungsrelais (14) einpolig ist.

13. Elektrofahrzeug nach einem der Ansprüche 1 bis 12, wobei das Verbindungsrelais (14) zwischen den zwei Halb-Packs (12A, 12B) angeordnet ist.

## Claims

1. Electric vehicle comprising a power circuit (11), said circuit comprising a power battery (12) including two half-packs (12A, 12B), a connector (13) for connecting the power circuit to an electric motor of said vehicle, and a connection relay (14) for switching the power circuit on or off, the power circuit (11) further comprising a double-pole electric cut-off safety device (1) arranged so as to be capable of disconnecting both poles (15, 16) of the power battery (12), the vehicle being **characterized in that** the cut-off device comprises a plug (2) removably inserted into a socket (3), the removal of the plug resulting in the simultaneous disconnection of the two poles.

2. Vehicle according to Claim 1, wherein said plug further comprises at least one main fuse (7) on at least one of the poles (5, 6).

3. Vehicle according to Claim 2, wherein said at least one main fuse (7) is a fast-acting fuse.

4. Vehicle according to any of Claims 1 to 3, wherein said plug (2) comprises a lever (4) for locking to and unlocking from the socket (3), the lever being capable of providing effort reduction.

5. Vehicle according to any of Claims 1 to 4, further comprising a means (10, 20) for testing for the presence of the plug (2) in the socket (3).

6. Vehicle according to Claim 1, wherein the electric cut-off safety device (1) is placed between the power battery (12) and the connector (13).

7. Vehicle according to any of Claims 1 to 6, wherein the power circuit (11) further comprises a first secondary fuse (17), placed near the electric cut-off safety device (1).

8. Vehicle according to Claim 7, wherein said first secondary fuse (17) is a slow-acting fuse.

9. Vehicle according to Claim 7 or 8, wherein said first secondary fuse (17) is placed on a pole (15, 16) not protected by a main fuse (7).

10. Vehicle according to any of Claims 1 to 9, the power circuit (11) further comprising a second secondary fuse (18), placed between the two half-packs (12A, 12B).

11. Vehicle according to Claim 10, wherein said second secondary fuse (18) is a slow-acting fuse.

12. Vehicle according to any of Claims 1 to 11, wherein the connection relay (14) is of the single-pole type.

13. Electric vehicle according to any of Claims 1 to 12, wherein the connection relay (14) is placed between the two half-packs (12A, 12B).
